# EUROPEAN PATENT SPECIFICATION

(11) **EP 4 029 227 B1**
(45) Date of publication and mention of the grant of the patent: **11.12.2024**
(21) Application number: 19791237.1
(22) Date of filing: 22.10.2019
(51) Int. Cl.: H04M 1/02, G06F 1/16, E05D 1/00, E05D 1/02

(54) **BIDIRECTIONALLY FOLDABLE HINGE ASSEMBLY FOR ELECTRONIC DEVICE**
BIDIREKTIONAL KLAPPBARE SCHARNIERANORDNUNG FÜR ELEKTRONISCHE VORRICHTUNG
ENSEMBLE CHARNIÈRE PLIABLE DANS DEUX DIRECTIONS POUR DISPOSITIF ÉLECTRONIQUE

(43) Date of publication of application: 20.07.2022
(73) Proprietor: HUAWEI TECHNOLOGIES CO., LTD., Shenzhen, Guangdong 518129 (CN)
(72) Inventor: HEISKANEN, Juuso, 16440 Kista (SE)
(74) Representative: Maiwald GmbH
(86) International application number: PCT/EP2019/078632
(87) International publication number: WO 2021/078364

(56) References cited:
- EP-A2- 2 765 479
- US-A1- 2019 245 955

## Description

### TECHNICAL FIELD

The disclosure relates to a hinge assembly for an electronic device, the hinge assembly being moveable between an unfolded position and at least a first folded end position.

### BACKGROUND

The size of electronic devices, such as tablets and mobile phones, is an important consideration when designing electronic devices. The user oftentimes requests the outer dimensions of the device to be as small as possible while still providing a display which is as large as possible.

This problem may be solved by means of a foldable electronic device comprising one or several support bodies, interconnected by means of a hinge, covered by a display. The support body/bodies and the display can be folded together to provide an as small electronic device as possible, and unfolded to provide an as large display as possible.

In order to support the display also in the hinge area, the hinge may comprise a saw-toothed structure, the gaps provided by the structure allowing the hinge, and hence the electronic device, to fold in at least one direction. Such a structure is a middle-ground solution which is neither flexible enough to withstand and pass a folding cycle test, nor rigid enough to be able to carry and support all loads applied onto it by the user.

US 2019/245955 A1 describes a foldable device.

EP 2 765 479 A2 describes a flexible portable terminal.

### SUMMARY

It is an object to provide an improved foldable electronic device. The foregoing and other objects are achieved by the features of the independent claim. Further implementation forms are apparent from the dependent claims, the description, and the figures.

According to a first aspect, there is provided a hinge assembly for an electronic device, the hinge assembly being moveable between an unfolded position and a first folded end position, the hinge assembly comprising a row of interconnected and abutting hinge blades,
the hinge blades being aligned in a common plane when the hinge assembly is in the unfolded position, each hinge blade having a first area of contact against neighboring hinge blades, wherein, when the hinge assembly is moved to the first folded end position, each hinge blade is rotated relative neighboring hinge blades around a hinge assembly rotation axis such that the hinge blade has a second area of contact against the neighboring hinge blades, the second area of contact being at least partially different from the first area of contact.

Such a solution allows a hinge assembly which allows the electronic device, in which it is fitted, to fold while still preventing the surface layer, such as the display of the electronic device, from becoming wrinkled and/or permanently deformed due to the folding. This also allows for a hinge assembly which has as small outer dimensions as possible, while having a range of motion which allows the electronic device to be moved between the unfolded position, in which the electronic device has a maximum width, and a folded position in which the sections of the electronic device are superimposed onto each other such that the electronic device has a minimum width.

The hinge blade is elongated with a longitudinal axis extending in parallel with the hinge assembly rotation axis, and the hinge blade has a cross-section in a plane perpendicular to the longitudinal axis which comprises a center part and a first tapered part extending in a first direction from the center part, in the plane perpendicular to the longitudinal axis, the first area of contact being located at the center part, the second area of contact being located at the first tapered part. The hinge assembly provides both a stable unfolded position as well as a stable folded end positions which prevents accidental folding beyond the mechanical limits of the device.

At least two of the hinge blades are interconnected at the center part by means of an elongated connection element which extends along a third axis perpendicular to the hinge assembly rotation axis and, when the hinge assembly is in the unfolded position, in the common plane, facilitating a hinge assembly which takes up minimal space and which is inherently stable when being folded together.

The elongated connection element comprises a resilient portion allowing the elongated connection element to lengthen as the hinge assembly is moved from the unfolded position to the first folded end position or the second folded end position, and shorten as the hinge assembly is moved from the first folded end position or the second folded end position to the unfolded position, providing the hinge assembly with additional flexibility and resilience.

In a possible implementation form of the first aspect, the hinge assembly is moveable between an unfolded position and a second folded end position, each hinge blade having a third area of contact against the neighboring hinge blades, the second area of contact and the third area of contact being located at opposite sides of the first area of contact, wherein when the hinge assembly is moved to the second folded end position, each hinge blade is rotated relative neighboring hinge blades around the hinge assembly rotation axis such that the hinge blade has the third area of contact against the neighboring hinge blades.

In a further possible implementation form of the first aspect, the hinge blade cross-section comprises a second tapered part extending from the center part in a second direction opposite to the first direction, the third area of contact being located at the second tapered part.

In a further possible implementation form of the first aspect, the first tapered part and/or the second tapered part comprises abase section and an apex section, the base section being arranged adjacent, or comprising, the center part, and neighboring apex sections of neighboring hinge blades being moved towards each other when the hinge assembly is moved to the first folded end position or to the second folded end position.

In a further possible implementation form of the first aspect, the elongated connection element extends along a neutral axis of the hinge assembly, interconnecting the hinge assembly in a plane in which the length of the elongated connection element is not affected while folding.

In a further possible implementation form of the first aspect, the elongated connection element comprises a bendable material. This allows the hinge blade to be dynamically flexible yet still provide sufficient static support for, e.g., a display extending across the hinge assembly.

In a further possible implementation form of the first aspect, a longitudinal length of the elongated connection element, along the third axis, remains the same as the hinge assembly is moved between the unfolded position and the first folded end position or the second folded end position. This facilitates a hinge assembly which is flexible enough to withstand and pass a folding cycle test, while still is rigid enough to be able to carry and support all loads applied onto it by the user.

In a further possible implementation form of the first aspect, the base section of the first tapered part and the base section of the second tapered part have abutting sections at the center part, allowing the hinge blades to pivot in relation to each other without significant effort.

In a further possible implementation form of the first aspect, the center part comprises flat surfaces extending in a plane perpendicular to the common plane and parallel with the hinge assembly rotation axis, providing a hinge assembly which is more stable when in the unfolded position.

In a further possible implementation form of the first aspect, the hinge blades and/or the elongated connection element comprise a metal and/or aramid material, providing sufficient static support for, e.g., a display extending across the hinge assembly.

According to a second aspect, there is provided an electronic device comprising a first frame section, a second frame section, a display connected to at least one of the first frame section and the second frame section, and a hinge assembly according to the above interconnecting the first frame section and the second frame section such that the first frame section and the second frame section are pivotable, relative each other, between an unfolded position and a first folded end position, the first frame section and the second frame section being aligned in a common plane when in the unfolded position, the second frame section being superimposed on the first frame section when in the first folded end position.

This allows the electronic device to fold while still preventing the surface layer, such as the display of the electronic device, from becoming wrinkled and/or permanently deformed due to the folding.

In a possible implementation form of the second aspect, the hinge assembly interconnects the first frame section and the second frame section such that the first frame section and the second frame section are pivotable, relative each other, between an unfolded position and a second folded end position, the first frame section being superimposed on the second frame section when in the second folded end position.

This and other aspects will be apparent from and the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1a shows a schematic perspective view of a hinge assembly in accordance with one embodiment of the present invention, wherein the foldable assembly is in a folded end position;
Fig. 1b shows a partial perspective view of a hinge assembly in accordance with one embodiment of the present invention, wherein the foldable assembly is in a folded end position;
Fig. 2a shows a schematic side view of a pivot hinge of the hinge assembly in accordance with one embodiment of the present invention, wherein the pivot hinge is in an unfolded position as well as in both folded end positions;
Fig. 2b shows a schematic side view of a pivot hinge of the hinge assembly in accordance with a further embodiment of the present invention, wherein the pivot hinge is in an unfolded position and in a folded end position;
Fig. 3 a shows a schematic side view of a hinge assembly in accordance with one embodiment of the present invention;
Fig. 3b shows a schematic side view of the embodiment of Fig. 3a, wherein the pivot hinge is in an unfolded position;
Fig 3c shows a schematic side view of the embodiment of Figs. 3a and 3b, wherein the pivot hinge is in a folded end position;
Fig. 4a shows a schematic side view of a hinge assembly in accordance with a further embodiment of the present invention;
Fig. 4b shows a schematic side view of the embodiment of Fig. 4a, wherein the pivot hinge is in an unfolded position;
Fig 4c shows a schematic side view of the embodiment of Figs. 4a and 4b, wherein the pivot hinge is in a folded end position;
Fig. 5 shows a perspective view of a hinge assembly in accordance with one embodiment of the present invention, wherein the hinge assembly is in a folded end position;
Fig. 6 shows a perspective view of a hinge assembly in accordance with a further embodiment of the present invention, wherein the hinge assembly is in a folded end position;
Fig. 7 shows a cross-sectional view of an electronic device in accordance with one embodiment of the present invention, wherein the electronic device is in an unfolded position as well as in both folded end positions;

### DETAILED DESCRIPTION

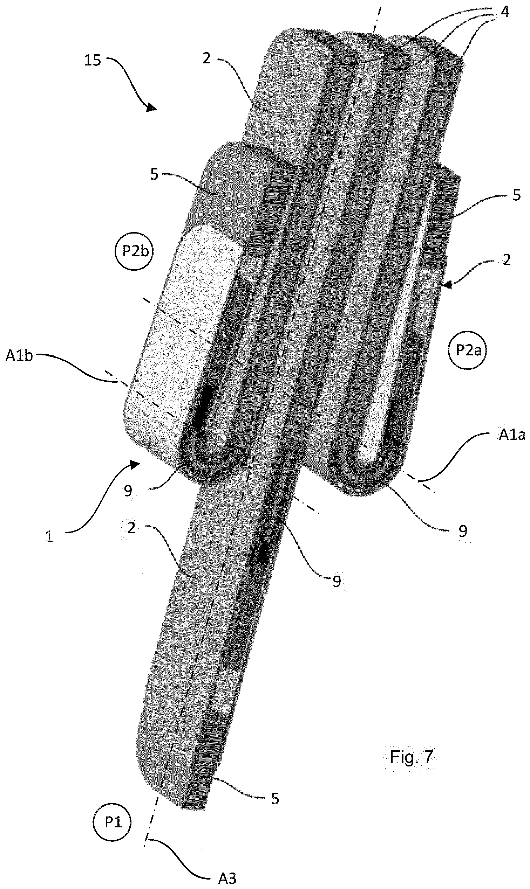

Fig. 7 shows an electronic device 15 comprising a display 2 and a hinge assembly 1 which is moveable between an unfolded position P1 and at least a first folded end position P2a. In a further embodiment, the foldable assembly 1 is also moveable between the unfolded position P1 and a second folded end position P2b. As the foldable assembly 1 is folded, the electronic device 15 is also folded from an unfolded position to a folded end position. The electronic device 15 may also comprise a back cover arranged oppositely to the display 2.

The electronic device 15 also comprises a first frame section 4 and a second frame section 5. The display 2 is connected to at least one of the first frame section 4 and the second frame section 5, and the hinge assembly 1 interconnects the first frame section 4 and the second frame section 5 such that the first frame section 4 and the second frame section 5 are pivotable, relative each other, between the above-mentioned unfolded position P1 and the first folded end position P2a. The first frame section 4 and the second frame section 5 are pivotable relative each other around the hinge assembly rotation axis A1a, A1b of the hinge assembly 1.

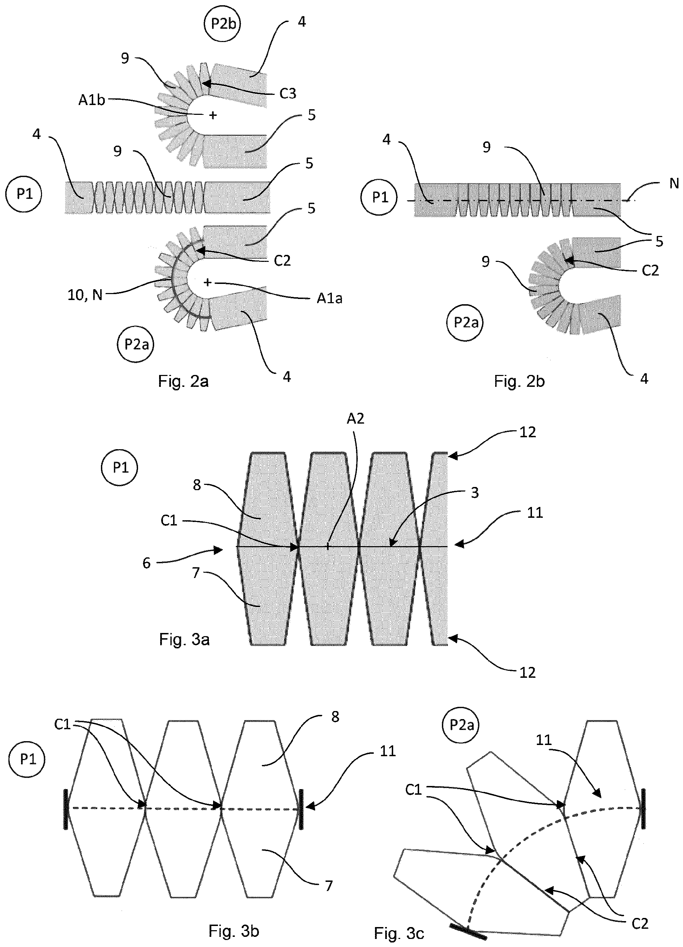

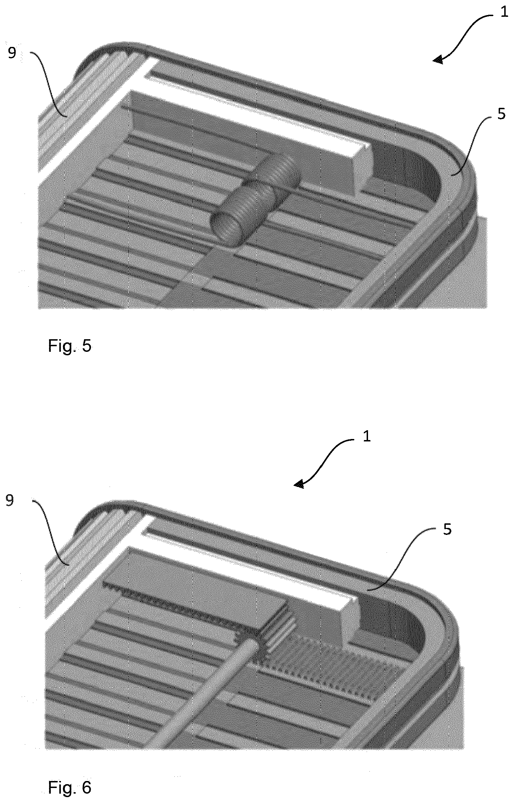

As shown in Figs. 2a, 2b, and 6, the first frame section 4 and the second frame section 5 are aligned in a common plane when in the unfolded position P1, and the second frame section 5 is superimposed on the first frame section 4 when in the first folded end position P2a.

The first frame section 4 and the second frame section 5 may also be pivotable, relative each other, between an unfolded position P1 and a second folded end position P2b,
the first frame section 4 being superimposed on the second frame section 5 when in the second folded end position P2b.

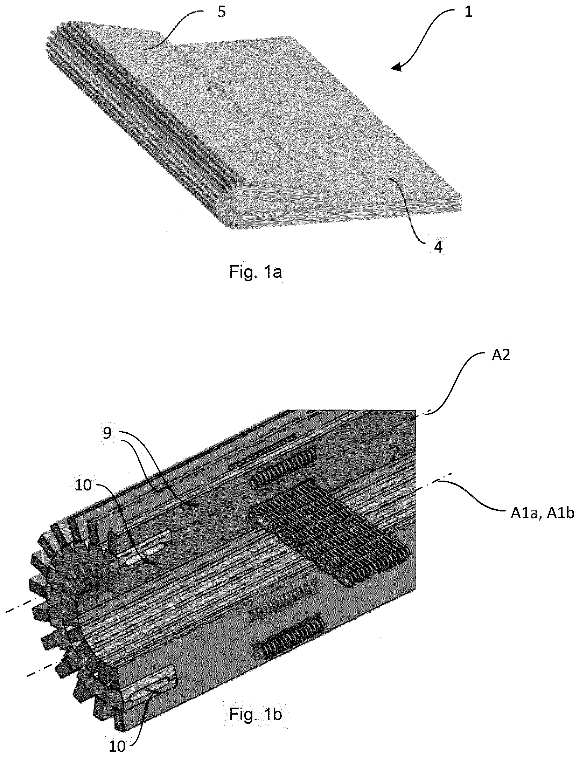

As shown in Figs. 1b to 4c, the hinge assembly 1 comprises a row of interconnected and abutting hinge blades 9. The hinge blades 9 are aligned in a common plane when the hinge assembly 1 is in the unfolded position P1, such that each hinge blade 9 has a first area of contact C1 against neighboring hinge blades 9. The hinge blades 9, and/or the elongated connection element 10, may comprise a metal and/or aramid material such as woven aramid or kevlar.

When the hinge assembly 1 is moved to the first folded end position P2a, each hinge blade 9 is rotated relative neighboring hinge blades 9 around the hinge assembly rotation axis A1 such that the hinge blade 9 has a second area of contact C2 against the neighboring hinge blades 9. The second area of contact C2 is at least partially different from the first area of contact C1, as shown in the lowermost drawings of Figs. 2a and 2b.

When the hinge assembly 1 is moved to the second folded end position P2b, each hinge blade 9 is rotated relative neighboring hinge blades 9 around the hinge assembly rotation axis A1 such that each hinge blade 9 has a third area of contact C3 against the neighboring hinge blades 9, as shown in the uppermost drawing of Fig. 2a. Hence, the second area of contact C2 and the third area of contact C3 are located at opposite sides of the first area of contact C1.

As indicated in Figs. 5 and 6, the first frame section 4, the second frame section 5, and the hinge plates 9 of the hinge assembly 1, which are described in more detail below, may have the same longitudinal dimension in the direction of the hinge assembly rotation axis A1. Each hinge blade 9 may be elongated with a longitudinal axis A2 extending in parallel with the hinge assembly rotation axis A1, as shown in Fig. 1b. Hence, the hinge assembly covers 1 not only the gap which extends between the first frame section 4 and the second frame section 5, but also substantially the entire gap which extends between the top and bottom edges of the outer device frame.

Each hinge blade 9 may have a cross-section, in a plane perpendicular to the longitudinal axis A2, which comprises a center part 6 and a first tapered part 7. The first tapered part 7 extends in a first direction from the center part 6, in the plane perpendicular to the longitudinal axis A2, as shown in Fig. 2b. The first area of contact C1 is located at the center part 6, and the second area of contact C2 is located at the first tapered part 7, as shown in Figs. 3a to 4c.

Each hinge blade 9 may have a cross-section which also comprises a second tapered part 8 extending from the center part 6 in a second direction opposite to the first direction, as shown in Figs. 2a, and 3a to 4c. The third area of contact C3 is located at the second tapered part 8.

The first tapered part 7 and the second tapered part 8 each comprises a base section 11 and an apex section 12 each, the base section 11 being arranged adjacent, or comprising, the center part 6. Neighboring apex sections 12 of neighboring hinge blades 9 are moved towards each other when the hinge assembly 1 is moved to the first folded end position P2a or to the second folded end position P2b, as is shown in Figs. 1a to 2b.

Fig. 3a shows an embodiment wherein the base sections 11 of the first tapered part 7 and the second tapered part 8 have abutting sections 3 arranged such that they are essentially the same, and the center part 6 comprises only a point around which the hinge blade 9 can pivot.

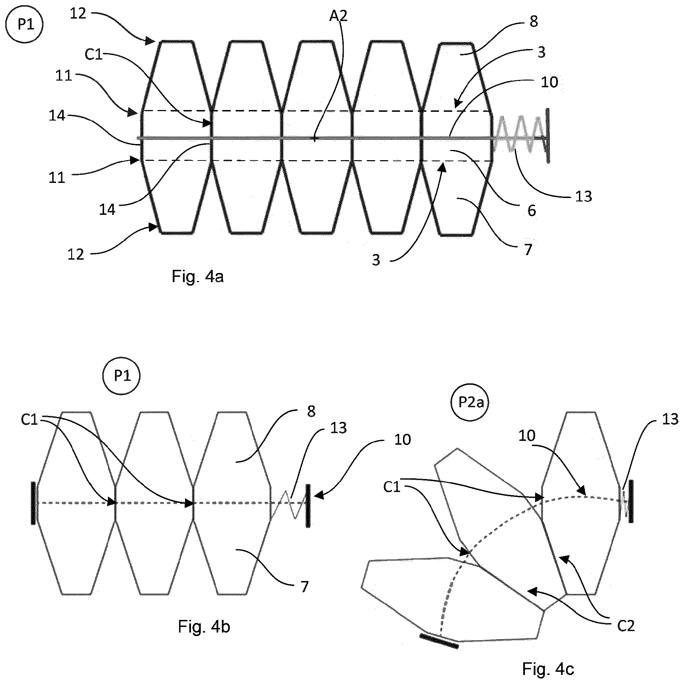

Figs. 4a to 4c shows an embodiment wherein the first tapered part 7 and the second tapered part 8 are separated by the center part 6, such that each section 3 of the two base sections 11 abut opposite sides of the center part 6. This is illustrated by means of dashed lines in Fig. 4a. The center part 6 may comprise flat surfaces 14 extending between these opposite sides, in a plane perpendicular to the common plane and parallel with the hinge assembly rotation axis A1.

At least two of the hinge blades 9 are interconnected at the center part 6 by means of an elongated connection element 10, as shown in Figs. 2a and 4a to 4c. The elongated connection element 10 extends along a third axis A3 which is perpendicular to the hinge assembly rotation axis A1 and, when the hinge assembly 1 is in the unfolded position P1, extends in the common plane, as shown in Fig. 7. The elongated connection element 10 may be a wire or a chain.

In one embodiment, the elongated connection element 10 extends along a neutral axis N of the hinge assembly 1. The longitudinal length of the elongated connection element 10, along the third axis A3, may remain the same as the hinge assembly 1 is moved between the unfolded position P1 and the first folded end position P2a or the second folded end position P2b.

The elongated connection element 10 may comprise a bendable material. The material of the elongated connection element 10 may furthermore be resilient yet essentially not stretchable in the longitudinal direction, i.e. along third axis A3. According to the invention, shown in Figs. 4a to 4c, the elongated connection element 10 comprises a resilient portion 13 allowing the elongated connection element 10 to lengthen as the hinge assembly 1 is moved from the unfolded position P1 to the first folded end position P2a or the second folded end position P2b, and shorten as the hinge assembly 1 is moved from the first folded end position P2a or the second folded end position P2b to the unfolded position P1.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A hinge assembly (1) for an electronic device (15), said hinge assembly (1) being moveable between an unfolded position (P1) and a first folded end position (P2a),
said hinge assembly (1) comprising a row of interconnected and abutting hinge blades (9),
said hinge blades (9) being aligned in a common plane when said hinge assembly (1) is in said unfolded position (P1), each hinge blade (9) having a first area of contact (C1) against neighboring hinge blades (9),
wherein, when said hinge assembly (1) is moved to said first folded end position (P2a), each hinge blade (9) is rotated relative neighboring hinge blades (9) around a hinge assembly rotation axis (A1) such that said hinge blade (9) has a second area of contact (C2) against said neighboring hinge blades (9),
said second area of contact (C2) being at least partially different from said first area of contact (C1),
wherein said hinge blade (9) is elongated with a longitudinal axis (A2) extending in parallel with said hinge assembly rotation axis (A1), and
said hinge blade (9) has a cross-section in a plane perpendicular to said longitudinal axis (A2) which comprises a center part (6) and a first tapered part (7) extending in a first direction from said center part (6), in said plane perpendicular to said longitudinal axis (A2),
said first area of contact (C1) being located at said center part (6), said second area of contact (C2) being located at said first tapered part (7),
wherein at least two of said hinge blades (9) are interconnected at said center part (6) by means of an elongated connection element (10) which extends along a third axis (A3) perpendicular to said hinge assembly rotation axis (A1) and, when said hinge assembly (1) is in said unfolded position (P1), extends in said common plane,
**characterized in that** said elongated connection element (10) comprises a resilient portion (13) allowing said elongated connection element (10) to lengthen as said hinge assembly (1) is moved from said unfolded position (P1) to said first folded end position (P2a) or said second folded end position (P2b), and shorten as said hinge assembly (1) is moved from said first folded end position (P2a) or said second folded end position (P2b) to said unfolded position (P1).

2. The hinge assembly (1) according to claim 1, wherein said hinge assembly (1) is moveable between an unfolded position (P1) and a second folded end position (P2b),
each hinge blade (9) having a third area of contact (C3) against said neighboring hinge blades (9), said second area of contact (C2) and said third area of contact (C3) being located at opposite sides of said first area of contact (C1), wherein when said hinge assembly (1) is moved to said second folded end position (P2b), each hinge blade (9) is rotated relative neighboring hinge blades (9) around said hinge assembly rotation axis (A1) such that said hinge blade (9) has said third area of contact (C3) against said neighboring hinge blades (9).

3. The hinge assembly (1) according to claim 1, wherein said hinge blade (9) cross-section comprises a second tapered part (8) extending from said center part (6) in a second direction opposite to said first direction, said third area of contact (C3) being located at said second tapered part (8).

4. The hinge assembly (1) according to claim 1 to 3, wherein said first tapered part (7) and/or said second tapered part (8) comprises a base section (11) and an apex section (12), said base section (11) being arranged adjacent, or comprising, said center part (6), and neighboring apex sections (12) of neighboring hinge blades (9) being moved towards each other when said hinge assembly (1) is moved to said first folded end position (P2a) or to said second folded end position (P2b).

5. The hinge assembly (1) according to any one of claims 1 to 4, wherein said elongated connection element (10) extends along a neutral axis (N) of said hinge assembly (1).

6. The hinge assembly (1) according to any one of claims 1 to 5, wherein said elongated connection element (10) comprises a bendable material.

7. The hinge assembly (1) according to any one of claims 1 to 6, wherein a longitudinal length of said elongated connection element (10), along said third axis (A3), remains the same as said hinge assembly (1) is moved between said unfolded position (P1) and said first folded end position (P2a) or said second folded end position (P2b).

8. The hinge assembly (1) according to any one of claims 4 to 7, wherein said base section (11) of said first tapered part (7) and said base section (11) of said second tapered part (8) have abutting sections (3) at said center part (6).

9. The hinge assembly (1) according to any one of claims 1 to 8, wherein said center part (6) comprises flat surfaces (14) extending in a plane perpendicular to said common plane and parallel with said hinge assembly rotation axis (A1).

10. The hinge assembly (1) according to any one of the previous claims, wherein said hinge blades (9) and/or said elongated connection element (10) comprise a metal and/or aramid material.

11. An electronic device (15) comprising a first frame section (4), a second frame section (5), a display (2) connected to at least one of said first frame section (4) and said second frame section (5), and a hinge assembly (1) according to any one of claims 1 to 10 interconnecting said first frame section (4) and said second frame section (5) such that said first frame section (4) and said second frame section (5) are pivotable, relative each other, between an unfolded position (P1) and a first folded end position (P2a),
said first frame section (4) and said second frame section (5) being aligned in a common plane when in said unfolded position (P1),
said second frame section (5) being superimposed on said first frame section (4) when in said first folded end position (P2a).

12. The electronic device (15) according to claim 11, wherein said hinge assembly (1) interconnects said first frame section (4) and said second frame section (5) such that said first frame section (4) and said second frame section (5) are pivotable, relative each other, between an unfolded position (P1) and a second folded end position (P2b),
said first frame section (4) being superimposed on said second frame section (5) when in said second folded end position (P2b).

## Patentansprüche

1. Scharnieranordnung (1) für eine elektronisches Vorrichtung (15), wobei die Scharnieranordnung (1) zwischen einer ausgeklappten Position (P1) und einer ersten eingeklappten Endposition (P2a) bewegbar ist,
wobei die Scharnieranordnung (1) eine Reihe miteinander verbundener und aneinanderstoßender Scharnierblätter (9) umfasst,
wobei die Scharnierblätter (9) in einer gemeinsamen Ebene ausgerichtet sind, wenn sich die Scharnieranordnung (1) in der ausgeklappten Position (P1) befindet, wobei jedes Scharnierblatt (9) einen ersten Kontaktbereich (C1) mit benachbarten Scharnierblättern (9) aufweist,
wobei, wenn die Scharnieranordnung (1) in die erste zusammengeklappte Endposition (P2a) bewegt wird, jedes Scharnierblatt (9) relativ zu benachbarten Scharnierblättern (9) um eine Scharnieranordnungs-Drehachse (A1) gedreht wird, so dass das Scharnierblatt (9) einen zweiten Kontaktbereich (C2) mit den benachbarten Scharnierblättern (9) aufweist,
wobei sich der zweite Kontaktbereich (C2) zumindest teilweise von dem ersten Kontaktbereich (C1) unterscheidet,
wobei das Scharnierblatt (9) länglich ist und eine Längsachse (A2) aufweist, die parallel zu der Scharnieranordnuns-Drehachse (A1) verläuft, und
das Scharnierblatt (9) einen Querschnitt in einer Ebene senkrecht zu der Längsachse (A2) aufweist, der einen Mittelteil (6) und einen ersten verjüngten Teil (7) umfasst, der sich in einer ersten Richtung von dem Mittelteil (6) in der Ebene senkrecht zu der Längsachse (A2) erstreckt,
wobei sich der erste Kontaktbereich (C1) an dem Mittelteil (6) befindet und der zweite Kontaktbereich (C2) an dem ersten verjüngten Teil (7) befindet,
wobei mindestens zwei der Scharnierblätter (9) an dem Mittelteil (6) mittels eines länglichen Verbindungselements (10) miteinander verbunden sind, das sich entlang einer dritten Achse (A3) erstreckt, die senkrecht zu der Scharnieranordnungs-Drehachse (A1) steht, und sich, wenn sich die Scharnieranordnung (1) in der ausgeklappten Position (P1) befindet, in der gemeinsamen Ebene erstreckt,
**dadurch gekennzeichnet, dass** das längliche Verbindungselement (10) einen elastischen Abschnitt (13) aufweist, der es dem länglichen Verbindungselement (10) ermöglicht, sich zu verlängern, wenn die Scharnieranordnung (1) von der ausgeklappten Position (P1) in die erste eingeklappte Endposition (P2a) oder die zweite eingeklappte Endposition (P2b) bewegt wird, und sich zu verkürzen, wenn die Scharnieranordnung (1) von der ersten eingeklappten Endposition (P2a) oder der zweiten eingeklappten Endposition (P2b) in die ausgeklappte Position (P1) bewegt wird.

2. Scharnieranordnung (1) nach Anspruch 1, wobei die Scharnieranordnung (1) zwischen einer ausgeklappten Position (P1) und einer zweiten eingeklappten Endposition (P2b) bewegbar ist,
wobei jedes Scharnierblatt (9) einen dritten Kontaktbereich (C3) gegenüber den benachbarten Scharnierblättern (9) aufweist, wobei der zweite Kontaktbereich (C2) und der dritte Kontaktbereich (C3) sich auf gegenüberliegenden Seiten des ersten Kontaktbereichs (C1) befinden, wobei, wenn die Scharnieranordnung (1) in die zweite eingeklappten Endposition (P2b) bewegt wird, jedes Scharnierblatt (9) relativ zu benachbarten Scharnierblättern (9) um die Scharnieranordnungs-Drehachse (A1) gedreht wird, so dass das Scharnierblatt (9) den dritten Kontaktbereich (C3) gegenüber den benachbarten Scharnierblättern (9) aufweist.

3. Scharnieranordnung (1) nach Anspruch 1, wobei der Querschnitt des Scharnierblatts (9) einen zweiten verjüngten Teil (8) umfasst, der sich von dem Mittelteil (6) in eine zweite Richtung erstreckt, die der ersten Richtung entgegengesetzt ist, wobei sich der dritte Kontaktbereich (C3) an dem zweiten verjüngten Teil (8) befindet.

4. Scharnieranordnung (1) nach Anspruch 1 bis 3, wobei der erste verjüngte Teil (7) und/oder der zweite verjüngte Teil (8) einen Basisabschnitt (11) und einen Scheitelabschnitt (12) umfasst, wobei der Basisabschnitt (11) neben dem Mittelteil (6) angeordnet ist oder diesen umfasst, und benachbarte Scheitelabschnitte (12) benachbarter Scharnierblätter (9) aufeinander zu bewegt werden, wenn die Scharnieranordnung (1) in die erste zusammengeklappte Endposition (P2a) oder in die zweite zusammengeklappte Endposition (P2b) bewegt wird.

5. Scharnieranordnung (1) nach einem der Ansprüche 1 bis 4, wobei sich das längliche Verbindungselement (10) entlang einer neutralen Achse (N) der Scharnieranordnung (1) erstreckt.

6. Scharnieranordnung (1) nach einem der Ansprüche 1 bis 5, wobei das längliche Verbindungselement (10) ein biegbares Material aufweist.

7. Scharnieranordnung (1) nach einem der Ansprüche 1 bis 6, wobei eine Längslänge des länglichen Verbindungselements (10) entlang der dritten Achse (A3) gleich bleibt, wenn die Scharnieranordnung (1) zwischen der ausgeklappten Position (P1) und der ersten eingeklappten Endposition (P2a) oder der zweiten eingeklappten Endposition (P2b) bewegt wird.

8. Scharnieranordnung (1) nach einem der Ansprüche 4 bis 7, wobei der Basisabschnitt (11) des ersten verjüngten Teils (7) und der Basisabschnitt (11) des zweiten verjüngten Teils (8) an dem Mittelteil (6) aneinanderstoßende Abschnitte (3) aufweisen.

9. Scharnieranordnung (1) nach einem der Ansprüche 1 bis 8, wobei der Mittelteil (6) flache Oberflächen (14) umfasst, die sich in einer Ebene erstrecken, die senkrecht zu der gemeinsamen Ebene und parallel zu der Scharnieranordnungs-Drehachse (A1) ist.

10. Scharnieranordnung (1) nach einem der vorhergehenden Ansprüche, wobei die Scharnierblätter (9) und/oder das längliche Verbindungselement (10) ein Metall- und/oder Aramidmaterial umfassen.

11. Elektronische Vorrichtung (15), umfassend einen ersten Rahmenabschnitt (4), einen zweiten Rahmenabschnitt (5), ein Display (2), das mit mindestens einem der ersten Rahmenabschnitte (4) und des zweiten Rahmenabschnitts (5) verbunden ist, und eine Scharnieranordnung (1) nach einem der Ansprüche 1 bis 10, die den ersten Rahmenabschnitt (4) und den zweiten Rahmenabschnitt (5) so miteinander verbindet, dass der erste Rahmenabschnitt (4) und der zweite Rahmenabschnitt (5) relativ zueinander zwischen einer aufgeklappten Position (P1) und einer ersten eingeklappten Endposition (P2a) schwenkbar sind,
wobei der erste Rahmenabschnitt (4) und der zweite Rahmenabschnitt (5) in der ausgeklappten Position (P1) in einer gemeinsamen Ebene ausgerichtet sind,
wobei der zweite Rahmenabschnitt (5) in der ersten eingeklappten Endposition (P2a) auf dem ersten Rahmenabschnitt (4) liegt.

12. Elektronische Vorrichtung (15) nach Anspruch 11, wobei die Scharnieranordnung (1) den ersten Rahmenabschnitt (4) und den zweiten Rahmenabschnitt (5) so miteinander verbindet, dass der erste Rahmenabschnitt (4) und der zweite Rahmenabschnitt (5) relativ zueinander zwischen einer aufgeklappten Position (P1) und einer zweiten eingeklappten Endposition (P2b) schwenkbar sind,
wobei der erste Rahmenabschnitt (4) in der zweiten eingeklappten Endposition (P2b) auf dem zweiten Rahmenabschnitt (5) liegt.

## Revendications

1. Ensemble charnière (1) pour un dispositif électronique (15), ledit ensemble charnière (1) étant mobile entre une position dépliée (P1) et une première position d'extrémité pliée (P2a), ledit ensemble charnière (1) comprenant une rangée de lames de charnière (9) interconnectées et adjacentes,
lesdites lames de charnière (9) étant alignées dans un plan commun lorsque ledit ensemble charnière (1) est dans ladite position dépliée (P1), chaque lame de charnière (9) présentant une première zone de contact (C1) contre les lames de charnière voisines (9),
dans lequel, lorsque ledit ensemble charnière (1) est déplacé vers ladite première position d'extrémité pliée (P2a), chaque lame de charnière (9) est en rotation par rapport aux lames de charnière voisines (9) autour d'un axe de rotation de l'ensemble charnière (A1) de telle sorte que ladite lame de charnière (9) présente une deuxième zone de contact (C2) contre lesdites lames de charnière voisines (9),
ladite deuxième zone de contact (C2) étant au moins partiellement différente de ladite première zone de contact (C1),
dans lequel ladite lame de charnière (9) est allongée avec un axe longitudinal (A2) se prolongeant parallèlement audit axe de rotation de l'ensemble charnière (A1), et
ladite lame de charnière (9) présente une section transversale dans un plan perpendiculaire audit axe longitudinal (A2) qui comprend une partie centrale (6) et une première partie conique (7) se prolongeant dans une première direction à partir de ladite partie centrale (6), dans ledit plan perpendiculaire audit axe longitudinal (A2),
ladite première zone de contact (C1) étant située au niveau de ladite partie centrale (6), ladite deuxième zone de contact (C2) étant située au niveau de ladite première partie conique (7), dans lequel au moins deux desdites lames de charnière (9) sont interconnectées au niveau de ladite partie centrale (6) au moyen d'un élément de connexion allongé (10) qui se prolonge le long d'un troisième axe (A3) perpendiculaire audit axe de rotation de l'ensemble charnière (A1) et, lorsque ledit ensemble charnière (1) est dans ladite position dépliée (P1), il se prolonge dans ledit plan commun,
**caractérisé en ce que** ledit élément de connexion allongé (10) comprend une partie élastique (13) permettant audit élément de connexion allongé (10) de s'allonger lorsque ledit ensemble charnière (1) est déplacé de ladite position dépliée (P1) vers ladite première position d'extrémité pliée (P2a) ou vers ladite seconde position d'extrémité pliée (P2b), et de se raccourcir lorsque ledit ensemble charnière (1) est déplacé de ladite première position d'extrémité pliée (P2a) ou de ladite seconde position d'extrémité pliée (P2b) vers ladite position dépliée (P1) .

2. Ensemble charnière (1) selon la revendication 1, dans lequel ledit ensemble charnière (1) est mobile entre une position dépliée (P1) et une seconde position d'extrémité pliée (P2b), chaque lame de charnière (9) présentant une troisième zone de contact (C3) contre lesdites lames de charnière voisines (9), ladite deuxième zone de contact (C2) et ladite troisième zone de contact (C3) étant situées sur des côtés opposés de ladite première zone de contact (C1), dans lequel lorsque ledit ensemble charnière (1) est déplacé vers ladite seconde position d'extrémité pliée (P2b), chaque lame de charnière (9) est en rotation par rapport aux lames de charnière voisines (9) autour dudit axe de rotation de l'ensemble charnière (A1) de telle sorte que ladite lame de charnière (9) présente ladite troisième zone de contact (C3) contre lesdites lames de charnière voisines (9) .

3. Ensemble charnière (1) selon la revendication 1, dans lequel ladite section transversale de ladite lame de charnière (9) comprend une seconde partie conique (8) se prolongeant à partir de ladite partie centrale (6) dans une seconde direction opposée à ladite première direction, ladite la troisième zone de contact (C3) étant située au niveau de ladite seconde partie conique (8) .

4. Ensemble charnière (1) selon la revendication 1 à 3, dans lequel ladite première partie conique (7) et/ou ladite seconde partie conique (8) comprennent une section de base (11) et une section de sommet (12), ladite section de base (11) étant disposée adjacente, ou comprenant, ladite partie centrale (6), et des sections de sommet voisines (12) de lames de charnière voisines (9) étant rapprochées l'une de l'autre lorsque ledit ensemble charnière (1) est déplacé vers ladite première position d'extrémité pliée (P2a) ou vers ladite seconde position d'extrémité pliée (P2b).

5. Ensemble charnière (1) selon l'une quelconque des revendications 1 à 4, dans lequel ledit élément de connexion allongé (10) se prolonge le long d'un axe neutre (N) dudit ensemble charnière (1).

6. Ensemble charnière (1) selon l'une quelconque des revendications 1 à 5, dans lequel ledit élément de connexion allongé (10) comprend un matériau pliable.

7. Ensemble charnière (1) selon l'une quelconque des revendications 1 à 6, dans lequel une longueur longitudinale dudit élément de connexion allongé (10), le long dudit troisième axe (A3), reste la même lorsque ledit ensemble charnière (1) est déplacé entre ladite position dépliée (P1) et ladite première position d'extrémité pliée (P2a) ou ladite seconde position d'extrémité pliée (P2b).

8. Ensemble charnière (1) selon l'une quelconque des revendications 4 à 7, dans lequel ladite section de base (11) de ladite première partie conique (7) et ladite section de base (11) de ladite seconde partie conique (8) présentent des sections adjacentes (3) au niveau de ladite partie centrale (6).

9. Ensemble charnière (1) selon l'une quelconque des revendications 1 à 8, dans lequel ladite partie centrale (6) comprend des surfaces planes (14) se prolongeant dans un plan perpendiculaire audit plan commun et parallèle audit axe de rotation de l'ensemble charnière (A1).

10. Ensemble charnière (1) selon l'une quelconque des revendications précédentes, dans lequel lesdites lames de charnière (9) et/ou ledit élément de connexion allongé (10) comprennent un matériau métallique et/ou aramide.

11. Dispositif électronique (15) comprenant une première section de cadre (4), une seconde section de cadre (5), un affichage (2) connecté à au moins l'une de ladite première section de cadre (4) et de ladite seconde section de cadre (5), et un ensemble charnière (1) selon l'une quelconque des revendications 1 à 10 interconnectant ladite première section de cadre (4) et ladite seconde section de cadre (5) de telle sorte que ladite première section de cadre (4) et ladite seconde section de cadre (5) peuvent pivoter l'une par rapport à l'autre entre une position dépliée (P1) et une première position d'extrémité dépliée (P2a), ladite première section de cadre (4) et ladite seconde section de cadre (5) étant alignées dans un plan commun lorsqu'elles sont dans ladite position dépliée (P1),
ladite seconde section de cadre (5) étant superposée à ladite première section de cadre (4) lorsqu'elle se trouve dans ladite première position d'extrémité pliée (P2a).

12. Dispositif électronique (15) selon la revendication 11, dans lequel ledit ensemble charnière (1) interconnecte ladite première section de cadre (4) et ladite seconde section de cadre (5) de telle sorte que ladite première section de cadre (4) et ladite seconde section de cadre (5) peuvent pivoter l'une par rapport à l'autre entre une position dépliée (P1) et une seconde position d'extrémité pliée (P2b),
ladite première section de cadre (4) étant superposée à ladite seconde section de cadre (5) lorsqu'elle se trouve dans ladite seconde position d'extrémité pliée (P2b).
